Europäisches Patentamt

**European Patent Office**

Office européen des brevets

(19)

(11) Numéro de publication: **0 037 773 B1**

(12) **FASCICULE DE BREVET EUROPEEN**

(45) Date de publication du fascicule du brevet:
**27.06.84**

(51) Int. Cl.³: **A 47 C 7/28,** B 60 N 1/10

(21) Numéro de dépôt: **81400504.7**

(22) Date de dépôt: **30.03.81**

(54) **Siège arrière de véhicules automobiles.**

(30) Priorité: **02.04.80 FR 8007794**

(43) Date de publication de la demande:
**14.10.81 Bulletin 81/41**

(45) Mention de la délivrance du brevet:
**27.06.84 Bulletin 84/26**

(84) Etats contractants désignés:
**DE GB IT**

(56) Documents cités:
**DE - C - 277 877**
**FR - A - 775 406**
**FR - A - 2 300 525**

(73) Titulaire: **SOCIETE ANONYME AUTOMOBILES CITROEN, 117 à 167, Quai André Citroen, F-75747 Paris Cedex 15 (FR)**
Titulaire: **AUTOMOBILES PEUGEOT, 75, avenue de la Grande Armée, F-75116 Paris (FR)**

(72) Inventeur: **Prion, Christian Joseph, 1, Square Yves du Manoir, F-91300 Massy (FR)**

(74) Mandataire: **Boivin, Claude, 9, rue Edouard-Charton, F-78000 Versailles (FR)**

BUNDESDRUCKEREI BERLIN

## Description

Les sièges arrière d'un véhicule automobile doivent répondre à un certain nombre de conditions auxquelles il est difficile jusqu'à présent de satisfaire simultanément. Ils doivent à la fois être confortables et comporter une assise pouvant être rabattue verticalement, en particulier sur les véhicules convertibles. Ils doivent être verticalement relativement compacts et la surface inférieure de leur assise doit avoir une forme adaptée à celle du plancher; or, cette dernière forme est conditionnée par la présence des éléments que le plancher surmonte, notamment de l'essieu arrière et du réservoir de carburant. Enfin, leur dossier doit pouvoir être rabattu horizontalement, lorsque leur assise a été rabattue verticalement. Les assises du type »baquet« sont très confortables et sont relativement minces. Cependant, leur forme ne correspond pas nécessairement à celle du plancher; de plus, et surtout, leur face inférieure présente une protubérance qui gêne le rabattement du dossier.

Le brevet français 2 300 525 décrit un siège de véhicule, comprenant un cadre de support aux traverses avant et arrière duquel est relié un sommier par des éléments élastiques de traction et des articulations aux traverses du cadre, et un coussin reposant sur ce sommier.

La présente invention a pour objet un siège arrière du type ci-dessus qui satisfait aux diverses conditions indiquées ci-dessus et dans lequel l'appui du corps sur le dossier est amélioré.

Le siège selon l'invention est caractérisé en ce que, de manière connue en soi, le sommier comprend au moins deux surfaces rigides articulées entre elles suivant un axe transversal, en ce que l'un des bords transversaux de l'ensemble de ces surfaces est relié par les éléments élastiques de traction à la traverse avant du cadre alors que son autre bord transversal est articulé sur la traverse arrière de ce cadre.

Les surfaces rigides du sommier sont avantageusement planes. Les éléments élastiques de traction les maintiennent normalement dans un même plan de sorte que la face inférieure de l'assise du siège est pratiquement plane. Par suite, lorsque l'assise est rabattue verticalement, elle ne gêne pas le rabattement du dossier. Lorsqu'un passager s'assied sur le siège, le sommier se plie et prend une certaine flèche. Celle-ci, combinée avec la déformation du coussin, produit un excellent confort analogue à celui d'un siège »baquet«. Par ailleurs, l'ensemble des deux surfaces du sommier se déplace vers l'arrière, c'est-à-dire vers le fond d'assise. Ce mouvement de recul améliore l'appui du corps de l'utilisateur sur le dossier du siège.

On a décrit ci-après, à titre d'exemple non limitatif, un mode de réalisation d'un siège arrière de véhicule selon l'invention, avec référence au dessin annexé dans lequel:

La fig. 1 est une vue latérale de l'assise du siège à l'état libre;

la fig. 2 est une vue en perspective du sommier;

la fig. 3 est une vue semblable à la fig. 1 lorsque le passager est assis sur le siège;

la fig. 4 est une vue latérale de l'ensemble du siège, montrant l'assise et le dossier rabattus.

Tel qu'il est représenté au dessin, le siège selon l'invention comporte un cadre d'assise 1 muni à sa partie avant de goussets 2 pouvant être montés pivotants autour d'un axe 3 sur le plancher 4 d'un véhicule automobile.

Le cadre 1 est associé à un sommier élastique comprenant un certain nombre de tôles rigides articulées entre elles autour d'axes transversaux; dans le cas présent, ce sommier comprend deux tôles 5 et 6 reliées l'une à l'autre par des charnières 7.

La tôle avant 5 du sommier est reliée à la traverse avant 1a du cadre 1 par des éléments élastiques de traction 8 constitués par exemple par des ressorts. La tôle arrière 6 de ce sommier est reliée à la traverse arrière 1b du cadre 1 par des pattes 9 en S, dont une extrémité coiffe la traverse arrière de ce cadre et dont l'extrémité opposée est engagée dans des ouvertures 10 de la tôle de telle sorte qu'elle forme palier pour cette dernière.

L'assise du siège est complétée par un coussin 11 qui est centré sur le cadre 1. La longueur de ce coussin est supérieure à celle du cadre de sorte qu'il repose sur les traverses avant 1a et 1b de ce cadre; par contre, sa largeur est inférieure à celle dudit cadre de manière à permettre à sa partie centrale de reposer sur le sommier 5—6.

Le siège comprend un dossier 12 qui, dans le mode de réalisation représenté, est indépendant de l'assise et monté pivotant en 13 sur le plancher 4. Celui-ci coiffe les éléments qu'il recouvre, tels que l'essieu arrière, la suspension et le réservoir de carburant, en passant le plus près possible de ceux-ci. Il existe, de ce fait, un espace relativement important 14 entre ce plancher et le sommier 5—6 de l'assise.

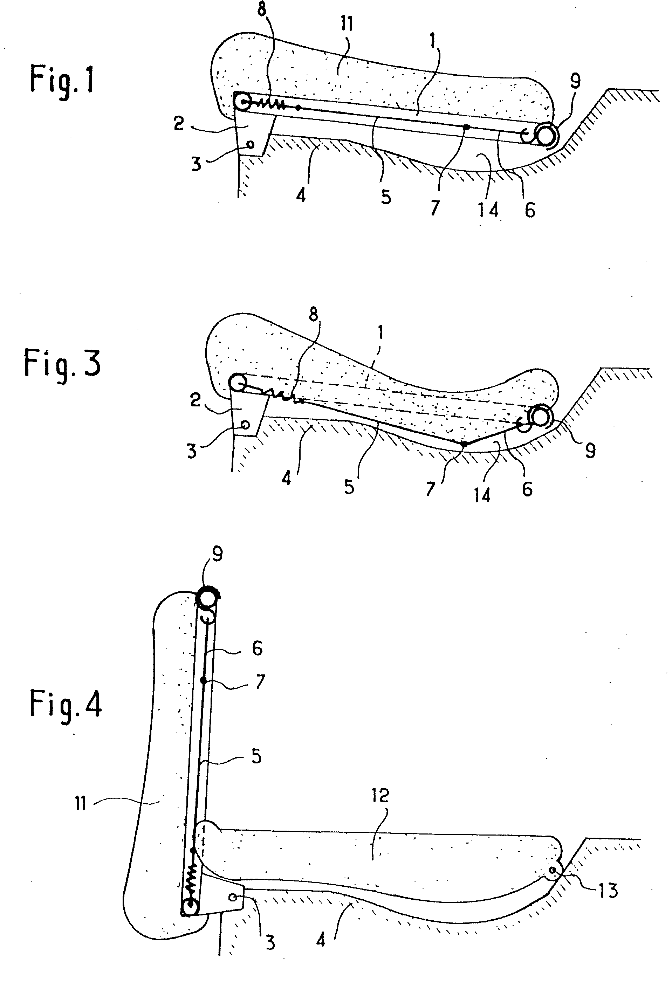

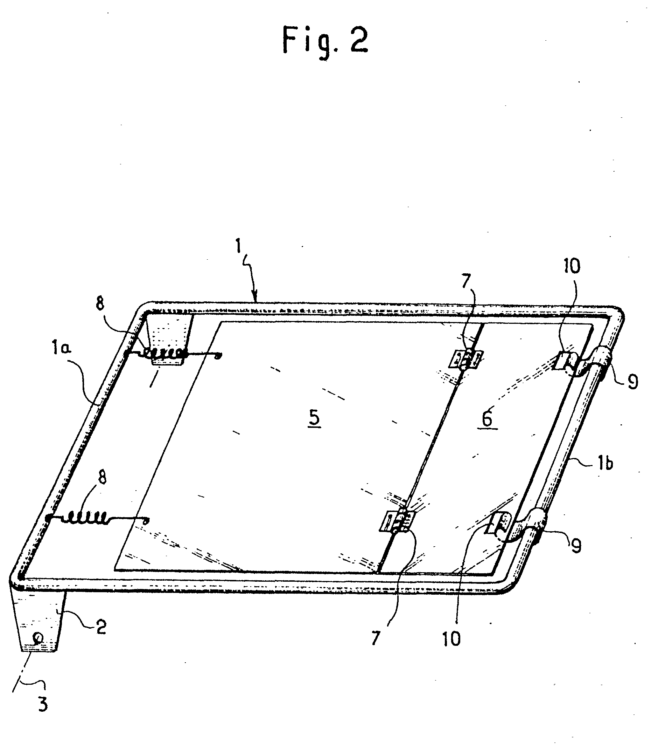

Lorsque le siège n'est pas utilisé, les deux tôles 5 et 6 du sommier sont maintenues par les ressorts 8 dans un même plan sensiblement parallèle à la face inférieure du coussin 11 (fig. 1).

Lorsqu'un passager s'assied sur le siège, le plan du sommier se brise; ce sommier prend une certaine flèche (fig. 3), sa position d'équilibre dépendant des réactions engendrées par les ressorts 8. Le fond de l'assise se rapproche du plancher 4 et prend une forme voisine de celle d'un siège »baquet«. La présence simultanée de la déformation du coussin 11, de la flèche du sommier et de l'allongement des ressorts 8 permet d'obtenir un confort particulièrement élevé qu'il est rare d'atteindre avec un siège ayant une compacité verticale aussi grande.

En l'absence de charge, on peut mettre l'assise en chandelle, par pivotement autour de l'axe 3 (fig. 4). Le fond de l'assise a repris sa forme plane sous l'action des ressorts 8, ce qui permet le passage du dossier 12 et son rabattement sur le plancher 4.

Il va de soi que l'invention ne doit pas être considérée comme limitée au mode de réalisation décrit et représenté, mais en couvre, au contraire, toutes les variantes. C'est ainsi, en particulier, que le sommier pourrait comporter plus d'une ligne de fracture transversale. Il pourrait également comporter une ou plusieurs lignes de fracture longitudinale, plusieurs alignements de tôle, tels que 5 et 6, étant disposés parallèlement entre les traverses 1a et 1b du cadre.

## Revendications

1. Siège arrière de véhicules automobiles, présentant une assise comportant un cadre de support (1) aux traverses avant et arrière (1a, 1b) duquel est relié un sommier (5, 6) par des éléments élastiques de traction (8) et des articulations aux traverses du cadre, et un coussin (11) reposant sur ce sommier, caractérisé en ce que, de manière connue en soi, le sommier comprend au moins deux surfaces rigides (5, 6) articulées entre elles suivant un axe transversal, en ce que l'un des bords transversaux de l'ensemble de ces surfaces est relié par les éléments élastiques de traction (8) à la traverse avant (1a) du cadre (1) alors que son autre bord transversal est articulé sur la traverse arrière (1b) de ce cadre.

2. Siège selon la revendication 1, caractérisé en ce que les surfaces rigides du sommier sont planes.

3. Siège selon l'une quelconque des revendications précédentes, caractérisé en ce que le sommier comporte une ou plusieurs lignes de fractures longitudinales.

## Patentansprüche

1. Rücksitz von Automobilen mit einem mit je einer vorderen und hinteren Traverse (1a, 1b) versehenen Tragrahmen (1), mit welchem eine Unterlage (5, 6) durch federnde Zugelemente (8) und Gelenke an den Traversen des Rahmens verbunden ist, und mit einem auf dieser Unterlage ruhenden Polster (11), dadurch gekennzeichnet, daß in an sich bekannter Weise die Unterlage wenigstens zwei starre Flächen (5, 6) aufweist, welche durch eine zwischen ihnen querverlaufende Achse gelenkig verbunden sind, und daß der eine der Querränder dieser Flächeneinheit durch federnde Zugelemente (8) mit der vorderen Traverse (1a) des Rahmens (1) verbunden ist, während ihr anderer Querrand an der hinteren Traverse (1b) des Rahmens angelenkt ist.

2. Sitz nach Anspruch 1, dadurch gekennzeichnet, daß die starren Flächen (5, 6) der Unterlage eben sind.

3. Sitz nach einem der vorhergehenden Ansprüche, dadurch gekennzeichnet, daß die Unterlage eine oder mehrere längsverlaufende Trennlinien aufweist.

## Claims

1. Rear seat of automobile vehicles, presenting a seat comprising a support frame (1) to the front and rear crosspieces (1a, 1b) of which is connected a mattress element (5, 6) by elastic traction elements (8) and articulations to the crosspieces of the frame, and a cushion (11) resting on said mattress element, characterized in that, in manner known per se, the mattress element comprises at least two rigid surfaces (5, 6) articulated on each other along a transverse axis, in that one of the transverse edges of the assembly of these surfaces is connected by the elastic traction elements (8) to the front crosspiece (1a) of the frame (1) whilst its other transverse edge is articulated on the rear crosspiece (1b) of this frame.

2. Seat according to claim 1, characterized in that the rigid surfaces (5, 6) of the mattress element are plane.

3. Seat according to any one of the preceding claims, characterized in that the mattress element comprises one or more longitudinal lines of fractures.

Fig. 1

Fig. 3

Fig. 4

## Fig. 2